**Europäisches Patentamt**

**European Patent Office**

**Office européen des brevets**

(19)

(11) Veröffentlichungsnummer: **0 367 829**

**A1**

(12) # EUROPÄISCHE PATENTANMELDUNG
## veröffentlicht nach Art. 158 Abs. 3 EPÜ

(21) Anmeldenummer: **89902308.9**

(22) Anmeldetag: **18.01.89**

(86) Internationale Anmeldenummer: **PCT/SU89/00012**

(87) Internationale Veröffentlichungsnummer: **WO 89/07806 (24.08.89 89/20)**

(51) Int. Cl.⁵: **G07C 5/10, G06M 11/04**

(30) Priorität: **10.02.88 SU 4377447**

(43) Veröffentlichungstag der Anmeldung: **16.05.90 Patentblatt 90/20**

(84) Benannte Vertragsstaaten: **DE FR GB**

(71) Anmelder: **VSESOJUZNY NAUCHNO-ISSLEDOVATELSKY INSTITUT PO ISPYTANIJU MASHIN I OBORUDOVANIA DLYA ZHIVOTNOVODSTVA I KORMOPROIZVODSTVA pos. Doslidnitskoe Vasilkovsky raion Kievskaya obl. 255171(SU)**

Anmelder: **POLTAVSKY GOSUDARSTVENNY PEDAGOGICHESKY INSTITUT IMENI V.G.KOROLENKO ul. Ostrogradskogo, 2 Poltava, 314011(SU)**

(72) Erfinder: **SAKALO, Nikolai Grigorievich ul. Tsiolkovskogo, 41-9 Poltava, 314023(SU)**
Erfinder: **BREI, Vladimir Vladimirovich ul. Jubileinaya, 13-1 pos. Doslidnitskoe Vasilkovsky raion Kievskaya obl., 255171(SU)**
Erfinder: **SAKALO, Lev Grigorievich Bulvarny per., 4a Poltava, 314003(SU)**
Erfinder: **RIKHVA, Vladimir Yaroslavovich ul. Korolenko, 7 Poltava, 314011(SU)**
Erfinder: **SERDJUK, Mikhail Iliich ul. Shevchenko, 67-7 Poltava, 314039(SU)**
Erfinder: **POGORILY, Viktor Vasilievich ul. 60-let Oktyabrya, 4-14 pos. Doslidnitskoe Vasilkovsky raion Kievskaya obl., 255171(SU)**
Erfinder: **RUDENKO, Valery Pavlovich ul. Khotnevicha, 3-18 Poltava, 314023(SU)**
Erfinder: **ILJUKHIN, Anatoly Vasilievich ui. Polovki, 35-58 Poltava, 314034(SU)**

(74) Vertreter: **Patentanwälte Beetz sen. - Beetz jun. Timpe - Siegfried - Schmitt-Fumian-Mayr Steinsdorfstrasse 10 D-8000 München 22(DE)**

(54) **SYSTEM ZUR KONTROLLE UND EINSCHÄTZUNG EINER SAMENAUSSAAT.**

(57) Das System zur Kontrolle und Einschätzung einer Samenaussaat enthält mindestens einen Samengeber (1), einen Weggeber (4) mit einem Impulsformer (5), eine Rechenschaltung (2), eine Anzeigeeinheit (3). Darüber hinaus umfaßt die Rechenschaltung (2) eine Schaltung (6) zur Bestimmung der Zeitpunkte von Extrema, einen ersten Zähler (8), einen Demultiplexer (7), eine Löschschaltung (9) und eine Speichereinheit (10), die zweite Zähler (11) nach der Zahl diskreter Meßabstände im Zwischenraum zwischen den hintereinander auszuäenden Samen. Hierbei ist der Samengeber (1) mit der Schaltung (6)

zur Bestimmung der Zeitpunkte von Extrema verbunden, die an den Demultiplexer (7) geschaltet ist. Der Impulsformer (5) des Weggebers (4) ist mit dem ersten Zähler (8) verbunden, der Ausgänke aufweist, die auch an den Demultiplexer (7) geführt sind. Jeder Ausgang des Demultiplexers (7) ist mit einem entsprechenden Eingang der Löschschaltung (9) und einem entsprechenden zweiten Zähler (11) in der Speichereinheit (10) verbunden. Der Ausgang der Löschschaltung (9) ist mit dem anderen Eingang des ersten Zählers (8) verbunden, während die Ausgänge der zweiten Zähler (11) der Speichereinheit (10) an die Anzeigeeinheit (3) geschaltet sind.

FIG. 1

2

SYSTEM ZUR KONTROLLE UND EINSCHÄTZUNG EINER SAMENAUSSAAT

Gebiet der Technik

Die Erfindung bezieht sich auf den Landmaschinenbau und betrifft insbesondere Systeme zur Kontrolle und Einschätzung einer Samenaussaat.

Die Erfindung kann mit Erfolg in Einzelkornsähmaschinen für Samen von Rüben, Mais, Sojabohnen, Hülsenfrüchten Baumwolle, Sorgho, Sonnenblumen und Gemüsekulturen bei der Durchführung von Feldarbeiten sowie für die Durchführung von Prüfungen, für die Durchführung von Forschungsarbeiten bei der Wahl von Richtungen einer konstruktiven Verbesserung der Mechanismen von Sämaschinen, für deren technische Diagnostik, Aufstellung auf die Bereitstellungslinie, für die Prüfung der Funktionstüchtigkeit und die Auswahl optimaler Betriebsarten sowie für die Untersuchungen bei der Abarbeitung der Technologien der landwirtschaftlichen Produktion angewendet werden.

Zugrundeliegender Stand der Technik

Die Ertragsfähigkeit der landwirtschaftlichen Kulturen wird in erheblichem Maße durch die Abstände zwischen den Pflanzen bestimmt, die auf die wachstumsbedingungen derselben einwirken: Beleuchtung der Pflanzen und des Bodens zwischen ihnen, Flüssigkeits- und Temperaturverhältnisse, Unkrautbekämpfung, gegenseitige Beeinflussung der Pflanzen.

Die Gewährleistung gleicher Abstände zwischen den Samen im Vorgang ihrer Aussaat (Gleichmäßigkeit der Aussaat) nach den Aussaatkanälen von Mehrreihensämaschinen bleibt bis jetzt ein aktuelles Problem, das mit Hilfe eines Systems zur Kontrolle und Einschätzung einer Aussaat gelöst werden kann, das in erster Linie eine hohe Aussagekraft sowie Aussagesicherheit, eine hohe Genauigkeit, eine vollständige Kontrolle nach sämtlichen Aussaatkanälen und -parametern, eine Selektivität in Bezug auf die Arten von Störungen der Aussaatbetriebsart besitzt sowie aufnahmefähig durch den Operateur ist.

Außerdem müssen diese Systeme eine recht einfache und kompakte gerätetechnische Realisierung aufweisen, um den Bedienungsraum, hier das Traktorenführerhaus, nicht zu verrammeln und keine Schwierigkeiten bei dessen Montage zu bereiten.

Die bestehenden Systeme zur Kontrolle und Einschätzung einer Aussaat führen eine Kontrolle in der Regel nach den Parametern, wie sie Aussaatnorm, d.h. eine mittlere Samenmenge pro Flächeneinheit (die Aussaatnorm wird auch Aussaatmenge genannt) oder eine Aussaatintensität (Aussaatgeschwindigkeit), d.h. eine mittlere Menge von je Zeiteinheit auszusäenden Samen (US, A, 4225930, 4333096, DE,A, 2614959, 2657275 u.a. )sind, durch.

Der Nachteil derartiger Kontrolle ist der, daß eine geordnete zufällige Reihenfolge der Samen in einem Strom nur durch den Mittelwert ohne Rücksicht auf dessen Streuung, die hohe Werte erreichen kann, nicht gekennzeichnet werden kann, denn die Formierung des Ausgangsstroms der Samen wird durch folgende Gruppen von Faktoren wesentlich beeinflußt:

— Zustand von Mechanismen und Baugruppen der Sämaschine (Abweichungen in der Größe, Regelung, Einstellung, Abnutzung, Ausfall der Einzelbauelemente u.ä.);

— Zustand des Saatmaterials (Ausgeglichenheit, Reinheit);

— Bodenzustand (Feuchtigkeit, Härte, Bearbeitungsgüte).

Diese Faktoren verursachen Störungen verschiedenen Grades im Vorgang der Aussaat.

Insbesondere führt der Ausfall der Bauelemente mindestens eines der Aussaatgeräte der Sämaschine,

EP 0 367 829 A1

hervorgerufen durch dessen unbefriedigenden Zustand, zu einen Unterbrechung der Aussaat, was die bedeutsamste (grobe) Störung ist.

Die Abweichungen in der Betriebsart der Aussaatgeräte oder der Sämaschine im ganzen, die durch einen unbefriedigenden Zustand des Saatmaterials, des Bodens oder der Bauelemente der Sämaschine hervorgerufen sind, führen aber zu den Abweichungen in der Aussaatnorm.

All diese Störungen haben im Ergebnis eine Aussaatungleichmäßigkeit und also eine Ertragsabnahme zur Folge.

Darüber hinaus muß betont werden, daß das Fehlen der groben Störungen und die Einhaltung der Aussaatnorm noch kein Zeignis über das Vorhandensein gleicher Zwischenräume zwischen den Samen ablegen, die auch von den oben aufgezählten Faktoren abhängen.

Die Kontrolle und Einschätzung der Samenaussaat nach der Aussaatnorm oder - intensität, die einen gemittelten Wert darstellen und keine hohe Aussagekraft besitzen, sichern keine vollständige Kontrolle und keine Einschätzung der Betriebsart der Samenaussaat.

So z.B. gestattet es eines der obengenannten Systeme zur Kontrolle und Einschätzung einer Aussaat (US, A, 4333096), wie in der Patentbeschreibung verzeichnet, die Betriebsarten der Aussaat der einzelnen Aussaatgeräte miteinander mit Hilfe einer Mittelungsschaltung nach der Kanalzahl und der Aussaatzeit zu vergleichen sowie deren automatische Abstimmung nach der Empfindlichkeit gegen Verletzungen der Aussaatnorm bei einer Änderung der Betriebsarten der Sämaschine und eine vollständigere Kontrolle der Aussaat zu gewährleisten, weil es die Arbeit sämtlicher Aussaatgeräte zugleich überwacht.

Dieses System enthält Samengeber nach der Zahl der Aussaatgeräte der Sämaschine, die an Impulstreiber angeschlossen sind, einen Weggeber, der auch an seinen Impulstreiber angelegt ist, eine Rechenschaltung und

eine Anzeigeeinheit.

Die Rechenschaltung umfaßt Samenzähler, mit deren jedem ein jeweiliger Samengeber über einen jeweiligen Impulstreiber verbunden ist; eine Mittelungsschaltung für die Aussaatnorm, deren Eingang mit den Ausgängen dieser Zähler gekoppelt ist; eine Subtraktionsschaltung, deren Eingänge mit den Samenzählern und dem Ausgang der Mittelungsschaltung verbunden sind; eine Schaltung zur Bestimmung des Maximums der Signale der Subtraktionsschaltung; eine Schaltung zum Vergleich dieser Maxima mit einer Sollgrenze sowie an die Ausgänge der Vergleichsschaltungen angeschlossene Digitalanzeiger.

Die Arbeit des vorstehend aufgeführten Systems beruht jedoch nur auf der Überwachung der Aussaatnorm, deren Einhaltung die Aussaatgleichmäßigkeit und damit die erforderliche Vollständigkeit der Kontrolle nicht garantiert.

## Offenbarung der Erfindung

Der Erfindung liegt die Aufgabe zugrunde, ein System zur Kontrolle und Einschätzung einer Aussaat zu schaffen, in dem die neue Ausführung der Rechenschaltung es gestattet, eine höhere Aussagekraft und eine vollständigere Kontrolle, eine genauere Einschätzung der Betriebsart einer Samenaussaat zu sichern.

Die technische Aufgabe wird dadurch gelöst, daß in dem System zur Kontrolle und Einschätzung einer Samenaussaat in die Rechenschaltung eine Schaltung zur Bestimmung der Zeitmomente von Extrema, ein erster Zähler, ein Demultiplexer, eine Löschschaltung und eine Speichereinheit, die zweite Zähler nach der Zahl diskreter Meßabstände in jedem Zwischenraum zwischen den hintereinander auszusäenden Samen enthält, eingeführt sind, wobei die Schaltung zur Bestimmung der Zeitpunkte von Extrema mindestens einen mit einem Samengeber verbundenen Eingang und einen an den Demultiplexer gelegten Ausgang, der erste Zähler einen mit dem Ausgang eines Impulsformers verbundenen Eingang, einen anderen mit dem Ausgang der Löschschaltung gekoppelten Eingang und Ausgänge nach der Zahl der diskreten Meßabstände in jedem Zwischenraum zwischen den hintereinander auszusäenden Samen, aufweist , die jeweils an einen Eingang des Demultiplexers geschaltet sind, der seinerseits Ausgänge nach der Zahl der diskreten Meßabstände in jedem Abstand zwischen den hintereinander auszusäenden Samen enthält, die mit je einem Eingang der Löschschaltung und einem zweiten Zähler der Speichereinheit verbunden sind, deren Ausgänge an eine Anzeigeeinheit geführt sind.

Derartige schaltungstechnische Lösung des Systems zur Kontrolle und Einschätzung der Betriebsart einer Samenaussaat gestattet es, die Abstände zwischen den ausgesäten Samen mit einem hohen Genauigkeitsgrad unmittelbar zu überwachen.

Die positive Einschätzung der Betriebsart der Aussaat gestattet es, über ein Fehlen grober Verletzungen in der Arbeit sämtlicher Aussaatgeräte einer Sämaschine und über die Einhaltung der Aussaatnorm zu urteilen.

Um die Abstände zwischen den Samen der Aussaataggregate im System zur Kontrolle und Einschätzung einer Aussaat genauer zu bestimmen, enthält die Schaltung zur Bestimmung der Zeitpunkte von Extrema ein Verzögerungsglied, eine Subtraktionsschaltung und ein Schwellenglied, wobei der Eingang des Verzögerungsgliedes als Eingang der Schaltung zur Bestimmung der Zeitpunkte von Extrema auftritt und mit einem Eingang der Subtraktionsschaltung verbunden ist, deren anderer Eingang mit dem Ausgang des Verzögerungsgliedes und deren Ausgang mit dem Eingang des Schwellengliedes gekoppelt ist, dessen Ausgang als Ausgang der Schaltung zur Bestimmung der Zeitpunkte von Extrema dient.

Um die Ursache der Verletzung der Gleichmäßigkeit der Samenaussaat zu erkennen sowie die Kontrolle der Gleichmäßigkeit durch ein Aussaatgerät bei Verletzungen der Aussaatbetriebsart in einem beliebigen anderen Aussaatgerät der Sämaschine zu eliminieren, enthält das System zur Kontrolle und Einschätzung einer Samenaussaat Samengeber nach der Zahl der Aussaatgeräte, eine Schaltung zur Kontrolle von Ausfällen und Störungen in den Aussaatgeräten, eine Mittelungsschaltung mit Eingängen nach der Zahl der Samengeber, von denen jeder an seinen eigenen Samengeber und an die Schaltung zur Kontrolle von Ausfällen und Störungen angeschlossen ist, an deren andere Eingange der Ausgang der Mittelungsschaltung geführt ist, der auch mit dem Eingang des Schwellengliedes verbunden ist, eine Sperrschaltung, die zwischen dem Impulsformer und dem genannten ersten Zähler geschaltet und mit dem Ausgang des Schwellen gliedes verbunden ist, und eine Schaltung zur Bestimmung einer Aussaatnorm, die an die Samengeber und den Impulsformer angeschlossen ist.

Derartige schaltungstechnische Lösung des Systems im ganzen gestattet es, mit einem hohen Grad der Aussagekraft und der Genauigkeit Verletzungen eines beliebigen der Parameter in der Betriebsart der Aussaat nach dem Grad ihrer Wertigkeit, nämlich Unterbrechung der Aussaat, Verletzung der Aussaatnorm, Verletzung der Gleichmäßigkeit der Aussaat, operativ zu erkennen.

Hierbei gibt das Fehlen des Signals von bedeutsameren Verletzungen in der Schaltung zur Kontrolle von Ausfällen und Störungen dank dem Vorhandensein der Mittelungsschaltung des Schwellengliedes und der Sperrschaltung und dank ihrer Verbindung mit den anderen Bauelementen des Systems eine Gewähr dafür, daß alle Aussaatgeräte in gleichen Betriebsart arbeiten, was eine Voraussetzung für eine genauere und vollständigere Bewertung der Aussaatnorm und -gleichmäßigkeit in der gesamten Sämaschine schafft.

Zweckmäßig ist eine Ausführungsform, nach der die Schaltung zur Kontrolle von Ausfällen und Störungen in den Aussatgeräten integrierende Summatoren nach der Zahl der Aussantgeräte enthält, deren Direkteingänge jeweils Eingänge dieser Schaltung darstellen, die an die Samengeber gelegt sind, und deren Umkehreingänge mit dem Ausgang der Mittelungsschaltung verbunden sind, während an deren Ausgänge Signalisierungseinrichtungen angeschlossen sind.

Gemäß einer weiteren Ausführungsform enthält die Schaltung zur Bestimmung einer Aussaatnorm eine Schaltung zur Bestimmung der Zeitpunkte von Extrema, die an die Samengeber über eine Selektoreinrichtung angeschlossen ist, einen Wegzähler, einen Samenzähler, eine Löschschaltung und eine Anzeigeeinheit, wobei am Eingang des Wegzählers der genannte Ausgang des Impulsformers angeschlossen ist, der Ausgang des Wegzählers mit dem Eingang der Löschschaltung gekoppelt ist, deren einer Ausgang an den Eingang des Samenzählers und an den anderen Eingang des Wegzählers und deren anderer Ausgang an die Anzeigeeinheit gelegt ist, während der andere Eingang des Samenzählers mit dem Ausgang der Schaltung zur Bestimmung der Zeitpunkte von Extrema und dessen Ausgang mit der Anzeigeeinheit gekoppelt ist.

Derartige schaltungstechnische Lösung zur Bestimmung der Aussaatnorm zeichnet sich durch eine einfache gerätetechnische Realisierung und eine hohe Aussagesicherheit der Informationen aus, weil die Aussaatnorm nach der Samenmenge bei beliebig kleinen vorgegebenen Wegstrecken berechnet wird, was durch Nullung des Wegzählers beim Zurücklegen eines beliebigen in Abhängigkeit von der Häufigkeit der Samenaussaat vorgegebenen Weges durch ein Aussaatgerät gewährleistet wird.

Derartige Ausführungsform ist in dem Falle am effektivsten, wo die Schaltung zur Bestimmung der Zeitpunkte von Extrema ein Verzögerungsglied, eine Subtraktionsschaltung und ein Schwellenglied enthält, wobei der Eingang des Verzögerungsgliedes als Eingang der Schaltung zur Bestimmung der Zeitpunkte von Extrema fungiert und auch mit einem Eingang der Subtaktionsschaltung verbunden ist, deren anderer Eingang mit dem Ausgang des Verzögerungsgliedes und deren Ausgang mit dem Eingang des Schwellengliedes in Verbindung steht, dessen Ausgang als Ausgang der Schaltung zur Bestimmung der Zeitpunkte von Extrema dient.

Derartige Erkennung der Zeitpunkte von Extrema, d.h. des Augenblicks des Durchfluges eines Samens durch das Fühlglied des Gebers, geschieht unabhängig von der Größe, Form und Häufigkeit des Durchfluges der Samen.

Kurzbeschreibung der Zeichnungen

Das Erfindungswesen soll nachstehend an konkreten Ausführungsbeispielen anhand der Zeichnungen näher erläutert werden. Es zeigt:

Fig. 1 ein Blockschaltbild eines erfindungsgemäßen Systems zur Kontrolle und Einschätzung einer Samenaussaat;

Fig. 2 eine Schaltung zur Bestimmung der Zeitpunkte von Extrema im erfindungsgemäßen System zur Kontrolle und Einschätzung einer Samenaussaat;

Fig. 3 eine Ausführungsform des erfindungsgemäßen Systems zur Kontrolle und Einschätzung einer Samenaussaat;

Fig. 4 ein Funktionsschaltbild der in Fig. 3 gezeigten Ausführungsform des Systems;

Fig. 5 ein Funktionsschaltbild einer Anzeigeeinheit in einer Schaltung zur Bestimmung einer Aussaatnorm.

Bevorzugte Ausführungsformen der Erfindung

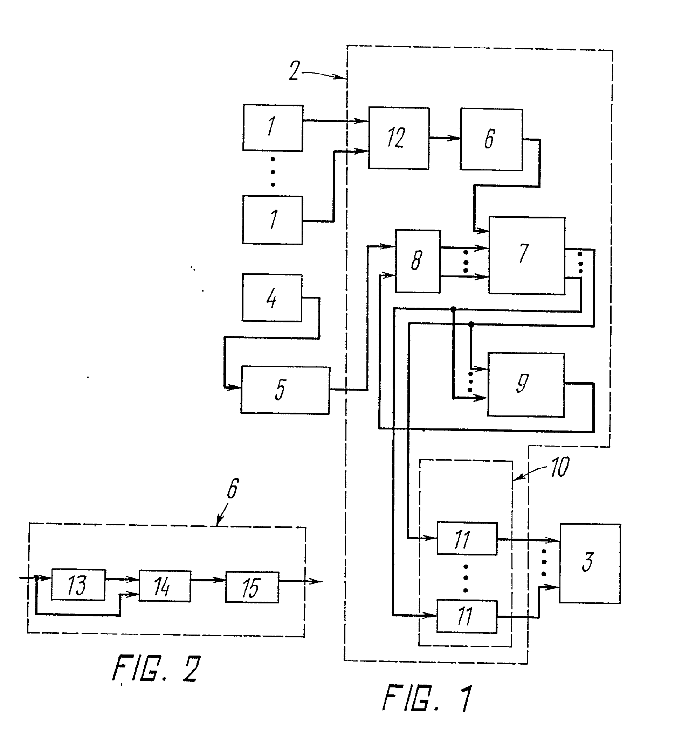

Das erfindungsgemäße System zur Kontrolle und Einschätzung einer Samenaussaat, wie es in Fig. 1 dargestellt ist, enthält mindestens einen Samengeber 1, eine Rechenschaltung 2 und eine Anzeigeeinheit 3. Die Samengeber 1 werden in Drillscharen (Aussaatgeräten) einer Sämaschine an der Austrittsstelle der Samen angeordnet und mittels eines Kabelbaumes mit der Rechenschaltung 2 verbunden, die in einem im Traktorenfahrerhaus angeordneten Pult montiert ist. Das Pult wird an das elektrische Bordnetz des Traktors angeschlossen.

Als Samengeber 1 können optische, UHF-, piezoelektrische oder andere Geber in Frage kommen.

Das Gesamtsystem enthält auch einen Weggeber 4 und einen Impulsformer 5 des Weggebers 4. Der Weggeber 4 kann auch als Radar oder in Form einer Verbindung von Magneten mit Herkonrelais derart ausgebildet werden, daß er am Ausgang einen Impuls beispielsweise nach jedem cm des Weges abgibt.

Die Rechenschaltung 2 umfaßt eine Schaltung 6 zur Bestimmung der Zeitpunkte von Extrema, einen Demultiplexer 7, einen ersten Zähler 8, eine Löschschaltung 9, die speziell eine Reihenschaltung von einem ODER-Glied und einem Verzögerungsglied enthält, sowie eine Speichereinheit 10, die sich aus zweiten Zählern 11 zusammensetzt, deren Zahl durch die Zahl diskreter Meßabstände in jedem Zwischenraum zwischen zwei hintereinander auszusäenden Samen definiert wird. Der diskrete Abstand kann gleich 1 cm und größer in Abhängigkeit von der Größe der Zwischenräume zwischen den Samen, die ihrerseits von der eingestellten Betriebsart der Aussaat abhängen, eingestellt werden.

Der Ausgang des Samengebers 1 ist mit dem Eingang der Schaltung 6 zur Bestimmung der Zeitpunkte von Extrema verbunden. Beim Vorhandensein der Samengeber 1 nach der Zahl der Aussastgeräte kann in das System ein Selektor 12 in Form eines von Hand oder von einem Taktgenerator gesteuerten Umschalters eingeführt werden. In diesem Fall sind die Samengeber 1 mit der Schaltung 6 zur Bestimmung der Zeitpunkte von Extrema über den Selektor 12 gekoppelt.

Der Ausgang der Schaltung 6 zur Bestimmung der Zeitpunkte von Extrema ist an einen der Eingänge des Demultiplexers 7 angeschlossen, mit dessen anderen Eingängen die Ausgänge des ersten Zählers 8 verbunden sind. An einen Eingang des ersten Zählers 8 ist der Ausgang des Impulsformers 5 des Weggebers 4 und an den anderen Eingang der Ausgang der Löschschaltung 9 gelegt, an deren Eingänge die Ausgänge des Demultiplexers 7 geführt sind, die auch an die Eingänge der zweiten Zähler 11 in der Speichereinheit 10 geschaltet sind. Die Ausgänge der zweiten Zähler 11, die als Ausgänge der Speichereinheit 10 dienen, sind an die Anzeigeeinheit 3 angeschlossen.

Die Anzeigeeinheit 3 kann beispielsweise einen Schalter mit der Anzeige der Nummer des Zählers 11, einen Dechiffrator, Digitalanzeiger nach der Stellenzahl des Zählers 11 und eine Schaltung dynamischer Anzeige umfassen.

Die Verwendung des Weggebers 4 und die genannten Verbindungen zwischen dem erzten Zähler 8, dem Demultiplexer 7, der Löschschaltung 9 und den Samengebern 1 ermöglichen die Bestimmung der Größe der Zwischenraume zwischen allen aufeinanderfolgenden Samen, während die Genauigkeit der Bestimmung dieser Zwischenräume durch das Vorhandensein der Schaltung 6 zur Bestimmung der Zeitpunkte von Signalextrema gewährleistet ist. Die Verbindungen des ersten Zählers 8 und des Demultiplexers 7 mit der Speichereinheit 10 gestatten es, nach der Zahl der diskreten Meßabstände im Zwischenraum zwischen den aufeinanderfolgenden Samen die Gleichmäßigkeit der Samenaussaat mit hohem Genauigkeitsgrad einzuschätzen, was die Aussagekraft der Einschätzung der Aussaat erhöht, da die Einhaltung der Aussaatgleichmäßigkeit von einer Befolgung der Aussaatnorm und vom Fehlen grober Verletzungen zeugt.

Um die Zwischenräume zwischen den Samen genauer festzustellen, ist die in Fig. 2 gezeigte Ausführungsform vorzuziehen, nach der die Schaltung 6 zur Bestimmung der Zeitpunkte von Extrema ein Verzögerungsglied 13, eine Subtraktionsschaltung 14 und ein Schwellenglied 15 enthält. Der Eingang des Verzögerungsgliedes 13 tritt als Eingang dieser Schaltung 6 auf und ist außerdem mit einem Eingang der Subtraktionsschaltung 14 verbunden. Der andere Eingang der Subtraktionsschaltung 14 ist mit dem Ausgang des Verzögerungsgliedes 13 und deren Ausgang mit dem Eingang des Schwellengliedes 15 gekoppelt. Der Ausgang des Schwellengliedes 15 dient als Ausgang der Schaltung 6 zur Bestimmung der Zeitpunkte von Extrema.

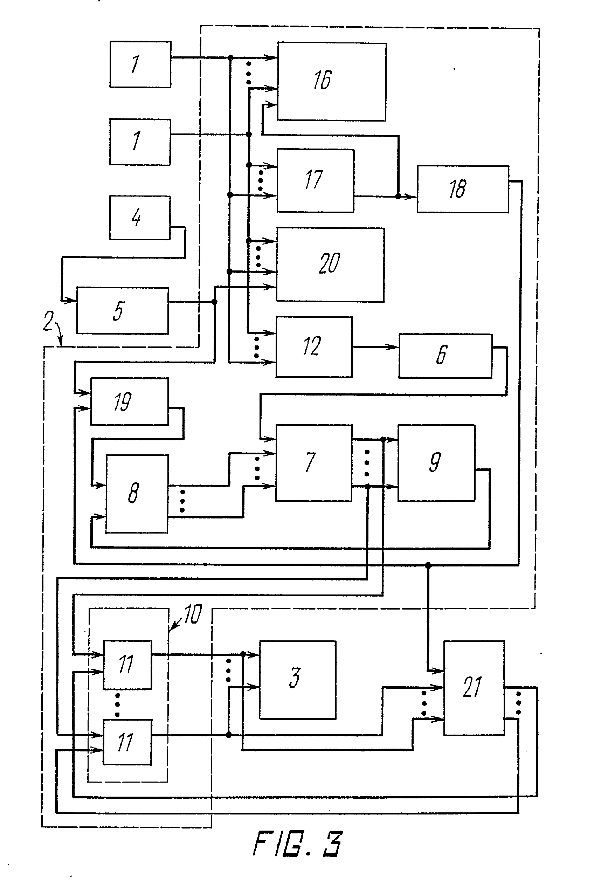

Zur Erkennung der Ursache einer Verletzung der Aussaatgleichmäßigkeit sowie zur Eliminierung ihrer Kontrolle in einem der Aussaatgeräte bei Abweichungen in der Betriebsart der Aussaat bei einem beliebigen anderen Aussaatgerät der Sämaschine enthält die Rechenschaltung 2 des Systems zur Kontrolle und Einschätzung einer Aussaat auch eine Schaltung 16 zur Kontrolle von Ausfällen und Störungen in den Aussaatgeräten (s. Fig. 3), eine Mittelungsschaltung 17, ein Schwellenglied 18, eine Sperrschaltung 19, eine Schaltung 20 zur Bestimmung einer Aussaatnorm, während die Zahl der Samengeber 1 der Zahl der Aussaatgeräte entspricht.

Hierbei sind die Eingänge der Mittelungschaltung 17 an je einen eigenen Samengeber 1 und an die Schaltung 16 zur Kontrolle von Ausfällen und Störungen angeschlossen, an deren anderen Eingang der Ausgang der Mittelungsschaltung 17 geführt ist. Der Ausgang der Mittelungsschaltung 17 ist auch mit dem Eingang des Schwellengliedes 18 verbunden. Der Ausgang des Schwellengliedes 18 ist an einen Eingang der Sperrschaltung 19 angelegt, die zwischen dem Impulsformer 5 und dem genannten ersten Zähler 8 geschaltet ist. Die Schaltung 20 zur Bestimmung einer Aussaatnorm ist an die Samengeber 1 und den Impulsformer 5 angeschlossen.

Die Sperrschaltung 19 kann ein UND-Glied darstellen.

Die Mittelungsschaltung 17 enthält speziell eine Reihenschaltung von einem Summator, einem Maßstabsverstärker, die z.B. aus Operationsverstärkern aufgebaut sind, sowie ein aperiodisches Glied, das einen Widerstand und einen Kondensator in sich einschließt.

Das System kann auch mit einem auswechselbaren Speicher 21 versehen sein, dessen Eingänge mit den Ausgängen der zweiten Zähler 11 der Speichereinheit 10 und des Schwellengliedes 18 verbunden sind.

Der auswechselbare Speicher 21 enthält speziell einen energieunabhängigen Festwertspeicher mit einer elektrischen Informationslöschung und eine Schreib-Lese-Steuerschaltung in Form von Mikroschaltkreisen.

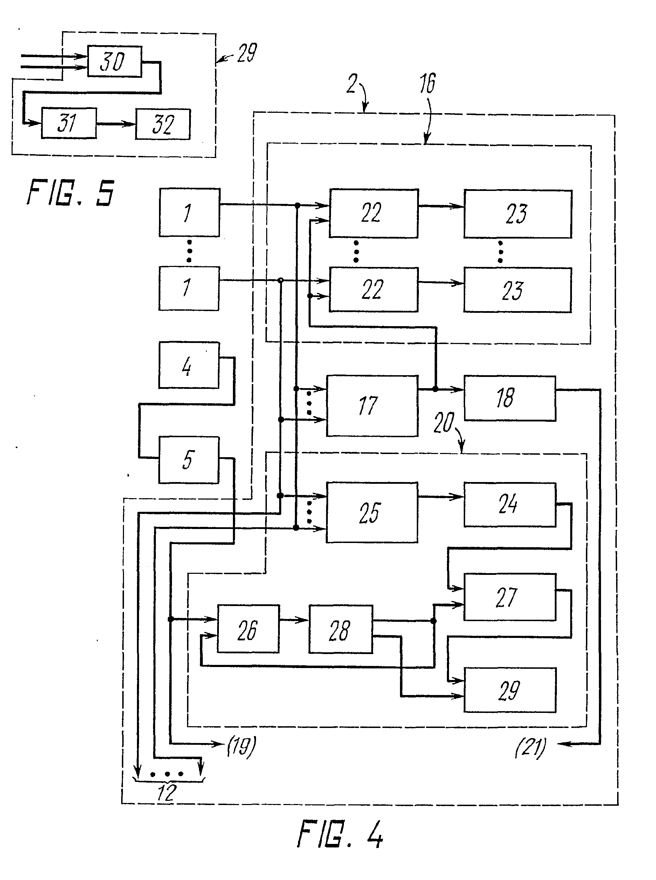

Zweckmäßig ist eine Ausführungsform, nach der die Schaltung 16 zur Kontrolle von Ausfällen und Störungen in den Aussatgeräten integrierende Summatoren 22 (Fig. 4) nach der Zahl der Samengeber 1 aufweist, deren Direkteingänge mit diesen Gebern 1 und deren Umkehreingänge mit dem Ausgang der Mittelungsschaltung 17 verbunden sind. An den Ausgang jedes integrierenden Summators 22 ist eine Signalisiereinrichtung 23 gelegt.

Die integrierenden Summatoren 22 können beispielsweise aus Operationsverstärkern in Form einer Reihenschaltung von einem Summator und einem Integrator aufgebaut werden.

Die Signalisiereinrichtung 23 kann beispielsweise in Form eines Leistungsverstärkers mit einer Leuchtdiode am Ausgang ausgeführt werden. Sämtliche Signalisiereinrichtungen 23 können in Form eines Leuchtanzeigers vereinigt werden.

Die Anwendung der integrierenden Summatoren 22 in der Schaltung 16 und die genannten Verbindungen der ersteren mit den Samengebern 1 und der Mittelungsschaltung 17 sorgen für ein analoges Prinzip der Überwachung der Ausfälle und Störungen in den Aussaatgeräten und also für deren Arbeit in Echtzeit, was die Arbeitsgeschwindigkeit des Systems in Bezug auf die schwerwiegendsten Störungen erhöht. Ein kontinuierlicher Vergleich der Betriebsarten der Aussaat in allen Aussaatgeräten untereinander in Echtzeit gestattet es dank der Verbindung der Mittelungsschaltung 17 mit den integrierenden Summatoren 22, die Störungen in der Betriebsart der Aussaat eines beliebigen Aussaatgerätes operativer und genauer zu erkennen. Deshalb gibt das Ausbleiben von Signalen über derartige Störungen eine sichere Gewähr dafür, daß sämtliche Aussaatgeräte in der gleichen Betriebsart arbeiten, was seinerseits eine Voraussetzung für die Bewertung der Aussaatnorm in der gesamten Sämaschine unter Benutzung eines Kanals schafft.

Es ist eine Ausführungsform vorteilhaft, nach der die Schaltung 20 zur Bestimmung einer Aussaatnorm eine Schaltung 24 zur Bestimmung der Zeitpunkte von Extrema (Fig. 4), die an die Samengeber 1 über eine Selektoreinrichtung 25 geführt ist, einen Wegzähler 26, einen Samenzähler 27, eine Löschschaltung 28 und eine Anzeigeeinheit 29 umfaßt. Hierbei ist ein Eingang des Wegzählers 26 an den Ausgang des Impulsformers 5 des Weggebers 4 und dessen Ausgang an den Eingang der Löschschaltung 28 angeschlossen. Ein Ausgang der Löschschaltung 28 ist an einen Eingang des Samenzählers 27 und den anderen Eingang des Wegzählers 26 und deren anderer Ausgang an die Anzeigeeinheit 29 geführt. Der andere Eingang des Samenzählers 27 ist mit dem Ausgang der Schaltung 24 zur Bestimmung der Zeitpunkte von Extrema und dessen Ausgang mit der Anzeigeeinheit 29 gekoppelt.

Die Anzeigeeinheit 29 kann eine Reihenschaltung aus einem Register 30 (s. Fig. 5), einem Dechiffrator 31, einem Digitalanzeiger 32 in sich einschließen. An die Eingänge des Registers 30, die als Eingänge der Anzeigeeinheit 29 auftreten, sind, wie oben angegeben, die Ausgänge des Samenzählers 27 und der Löschschaltung 28 geschaltet.

Die Schaltung 24 zur Bestimmung der Zeitpunkte von Extrema ist in Analogie zur oben beschriebenen Schaltung 6 ausgeführt.

Eine solche Lösung der Schaltung 20 zur Bestimmung einer Aussaatnorm zeichnet sich durch eine einfache gerätetechnische Realisierung aus, was, wie erwähnt, durch die Möglichkeit der Bewertung der Aussaatnorm unter Benutzung eines Kanals und durch eine hohe Aussagekraft der Information bedingt ist, da die Aussaatnorm nach der Samenzahl auf beliebig kleinen Wegstrecken berechnet wird. Für das letztere wird durch Nullung des Wegzählers 26 beim Zurücklegen eines beliebigen in Abhängigkeit von der Häufigkeit der Samenaussaat vorgegebenen Weges durch ein Aussaatgerät gesorgt.

Das System zur Kontrolle und Einschätzung einer Samenaussaat arbeitet wie folgt.

Die durch die Drillschare (Aussaatgeräte) der Sämaschine durchfliegenden Samen wirken auf die Samengeber 1 (s. Fig.1) ein, wodurch ein Erscheinen von elektrischen Impulssignalen in der Speiseleitung der Geber bedingt wird, die, falls erforderlich, verstärkt werden und über den Selektor 12 in die Rechenschaltung 2, speziell unmittelbar in die Schaltung 6 zur Bestimmung der Zeitpunkte von Extrema, gelangen, wo im Signal von jedem der Samen der Zeitpunkt des Extremums durch Subtraktion des auffallenden und des durch das Verzögerungsglied 13 verzögerten Signals voneinander in der Schaltung 14 erkannt wird. Das Signal von der Subtraktionsschaltung 14 gelangt auf den Eingang des Schwellengliedes 15, an dessen Ausgang ein Impuls erzeugt wird. Der auf solche Weise gebildete Impuls entspricht dem Zeitpunkt des Durchfluges eines jeden der Samen durch das Fühlglied des Gebers 1 unabhängig von der Größe und Form der Samen.

Die Anwendung der Schaltung 6 zur Bestimmung der
Zeitpunkte von Extrema gestattet es, Impulse von sämtlichen, darunter auch von den dicht hintereinander
Samen, d.h. bei Aussaatgeschwindigkeiten bis zu 60 Samen
je Sekunde, zu erhalten, wo der Zwischenraum zwischen
den Samen kleiner als die Samengröße ist.

Der Weggeber 4 liefert ein Signal nach dem Zurücklegen eines Sollweges, beispielsweise von 1 cm, durch
die Sämaschine. Dieses Signal wird durch den Impulsformer 5 auf den Pegel des Digitalsignals gebracht.
Die Impulse vom Former 5 treffen an einem Eingang des
ersten Zählers 8 ein. Der Zähler 8 zählt die Anzahl der
geformten Impulse vom Weggeber 4 zwischen allen aufeinanderfolgenden Impulsen vom Ausgang der Schaltung 6 zur
Bestimmung der Zeitpunkte von Extrema, d.h. zwischen
allen aufeinanderfolgenden Signalen von den ausgesäten
Samen. Der Impuls vom Ausgang der Schaltung 6 zur
Bestimmung der Zeitpunkte von Extrema setzt den Zähler 8
über den Demultiplexer 7 und die Löschschaltung 9 auf
Null.

Am Ausgang des Zählers 8 liegen Kodes von Zahlenbereichen der gebildeten Impulse des Weggebers 4 an, deren
jeder einem diskreten Meßabstand zugeordnet ist. Diese
Kodes gelangen auf die Eingänge des Demultiplexers 7,
der entsprechend dem Kode den Zähleingang des einen der
zweiten Zähler 11 in der Speichereinheit 10 an den Ausgang der Schaltung 6 zur Bestimmung der Zeitpunkte von
Extrema anlegt. Beim Auftreten eines Impulses am Ausgang der Schaltung 6 erhöht sich der Stand des entsprechenden zweiten Zählers 11 um 1.

Die zweiten Zähler 11 zählen also die Anzahl von diskreten Meßabständen im Zwischenraum zwischen den Samen,
d.h. sie speichern ein Histogramm einer Verteilung der
Zwischenräume zwischen den Samen in einer Reihe auf.
Die Information über die Aussaatgleichmäßigkeit wird auf der Anzeigeeinheit 3 sichtbar gemacht. Es ist klar, daß die Einhaltung der Aussaatgleichmäßigkeit vom Fehlen grober Abweichungen in der Arbeit der Aussaatgeräte und von der Befolgung der Aussaatnorm zeugt.

Die Erkennung der Ursache einer Verletzung der Samenaussaatgleichmäßigkeit unter Benutzung sämtlicher Aussaatkanäle ist dank der in Fig. 3, 4 dargestellten Ausführungsform möglich.

Bei dieser Ausführungsform arbeitet das System zur Kontrolle und Einschätzung einer Samenaussaat wie folgt.

Die Signale von den Samengebern 1 werden, falls nötig, verstärkt und auf die Direkteingänge der integrierenden Summatoren 22 und die Eingänge der Mittelungsschaltung 17 eingespeist. In der Mittelungsschaltung 17 werden die Signale summiert, dividiert und mittels des aperiodischen Gliedes zeitlich gemittelt. Das in der Mittelungsschaltung 17 erzeugte Signal gelangt auf die Umkehreingänge der integrierenden Summatoren 22, wo die Differenz der Signale von den Samengebern 1 und der Mittelungsschaltung 17 integriert wird. Läuft der Aussaatprozeß normal ab, so bleibt am Ausgang der integrierenden Summatoren 22 ein Signal aus, und die Signaleinrichtungen 23 arbeiten nicht. Ist eine große Verletzung in der Arbeit eines oder mehrerer Aussaatgeräte eingetreten, wird beispielsweise das Drillschar verstopft oder die Antriebskette zerrissen, liegt also eine vollständige Unterbrechung der Aussaat vor, so löst das Signal am Eingang des integrierenden Summators 22 rasch die entsprechenden Signalisiereinrichtungen 23 aus.

Liegt eine Abweichung von der Aussaatnorm in einem oder mehreren Aussaatgeräten vor, wächst das Signal am Ausgang des integrierenden Summators 22 langsamer an, bis die entsprechende Signalisiereinrichtung 23 ausgelöst worden ist. Darüber hinaus sorgt das analoge Prinzip der Arbeit für den Betrieb des Systems in Echtzeit.

Da die Kontrolle in Echtzeit beliebige Abweichungen feststellt, sichert ein Ausbleiben von Signalen an den Signalisiereinrichtungen 23 eine ungefähre Gleichheit der Aussaatnorm bei allen Geräten. Deshalb wird die Bestimmung der Werte der Aussaatnorm anhand des einen Aussaatgerätes stellvertretend für die gesamte Sämaschine sein. Beim Fehlen der Signale an den Signalisiereinrichtungen 23 überwacht der Operateur periodisch den Wert der Aussaatnorm in der gesamten Sämaschine nach dem Digitalanzeiger 32 in der Anzeigeeinheit 29, um die Richtigkeit der Aussaattechnologie zu prüfen. Falls eine der Signalisiereinrichtungen 23 ausgelöst wird, kann der Operateur nach dem Wert der Aussaatnorm die Art der Verletzung in der Aussaat beurteilen.

Die Signale von den Samengebern 1 gelangen über den Selektor 25 auf den Eingang der Schaltung 24 zur Bestimmung der Zeitpunkte von Extrema, wo im Signal von jedem der Samen der Zeitpunkt des Extremums erkannt wird, wie dies für die Schaltung 6 oben beschrieben ist.

Der Weggeber 4 liefert ein Signal nach dem Zurücklegen eines Sollweges beispielsweise von 1 cm durch die Sämaschine. Dieses Signal wird durch den Impulsformer 5 auf den Pegel eines Digitalsignals gebracht. Die Impulse kommen vom Impulsformer 5 am Zähleingang des Wegzählers 26 an, wo sie bis zur Solllänge des durch die Sämaschine zurückgelegten Weges (beispielsweise von 20 m) gezählt werden. Hierbei tritt am Ausgang des Wegzählers 26 ein Signal auf, das an einem Eingang der Löschschaltung 28 eintrifft. Zur selben Zeit gelangen auf einen Eingang des Samenzählers 27 Impulse vom Ausgang der Schaltung 24 zur Bestimmung der Zeitpunkte von Extrema über die ausgesäten Samen, wo sie auch gezählt werden. Das erste Signal der Löschschaltung 28 trifft am Schreib-Freigabeeingang des Registers 30 ein, und die Information vom Ausgang des Samenzählers 27 wird in das Register 30 eingeschrieben. Das zweite Signal der Löschschaltung 28 gelangt auf die Nullsetzeingänge des Wegzählers 26 und des Samenzählers 27. Hierbei werden die
genannten Zähler 26 und 27 auf Null gesetzt, und die
Schaltung 20 zur Bestimmung einer Aussaatnorm beginnt
mit einer weiteren Berechnung der Aussaatnorm. Die
Signale vom Ausgang des Registers 30 gelangen über
den Dechiffrator 31 auf den Digitalanzeiger 32, wo
die Information über die Aussaatnorm in der Samenmenge
pro Meter abgebildet wird.

Die genannten Schaltungen 16, 20 sorgen somit für die
Erkennung von Störungen in der Arbeit der Aussaatgeräte und von Abweichungen in der Aussaatnorm, d.h. es
wird eine traditionelle technologische Kontrolle der
Aussaat vorgenommen, nur daß im Unterschied zu den herkömmlichen Systemen zur Kontrolle und Einschätzung einer
Samenaussaat das vorliegende System bei einer recht einfachen gerätetechnischen Realisierung die Belastung des
Operateurs bei einer größeren Aussagesicherheit der
Kontrolle verringert.

Die Impulse vom Impulsformer 5 des Weggebers 4 gelangen auch in die Sperrschaltung 20, deren anderer Eingang mit dem Ausgang des Schwellengliedes 18 verbunden
ist.

Bei Ausbleiben des Signals am Ausgang der Mittelungsschaltung 17, d.h. beim Fehlen der Aussaat oder in den
Übergangsbetrieben der Sämaschine, spricht das Schwellenglied 18 an, und die Sperrschaltung 1 läßt keinen Impuls vom Former 5 zum Zähler 8 durch. Die Sperrschaltung 19 läßt diesen Impuls beim Vorhandensein eines
Signals vom Schwellenglied 18, d.h. im stationären Betrieb der Aussaatgeräte der Sämaschine, durch. Der Zähler 8 zählt die Zahl der geformten Impulse vom Weggeber 4 zwischen allen aufeinanderfolgenden Impulsen vom
Ausgang der Schaltung 6 zur Bestimmung der Zeitpunkte von
Extrema, d.h. zwischen allen aufeinanderfolgenden Signalen
von den ausgesäten Samen. Im weiteren geht die Arbeit des Systems,wie dies für die Fig. 1 beschrieben ist, vor sich.

Das behandejte System zur Kontrolle und Einschätzung einer Samenaussaat gestattet es also, die Samenverteilung über den Boden zu bewerten und Maßnahmen zu ergreifen, um diese auf dem optimalen Stand zu halten. Dies gewährleistet eine Steigerung der Hektarerträge von bis zu 30%.

Die Verbindung des analogen mit dem digitalen Prinzip der Kontrolle und Einschätzung der Aussaat mit einer Unterteilung des Systems nach der Arbeitsgeschwindigkeit in drei Stufen abhängig von der Tragweite der Störungen sichert eine Erhöhung der Arbeitsgeschwindigkeit des Systems bei der Erkennung von schwerwiegenderen Störungen, was die Menge von Lichten verringert und also eine zusätzliche Steigerung der Hektarerträge um 5 bis 10% gewährleistet. Darüber hinaus wird die Schaltung der herkömmlichen technologischen Kontrolle vereinfacht, die um ca. viermal weniger Bauelemente als das System enthält, das als Prototyp gewählt ist. Dies erlaubt es, die Kosten des Systems um 4 bis 5mal zu reduzieren. Der zusätzliche Effekt besteht auch in einiger Entlastung des Operateurs.

Die oben angeführten Realisierungsmöglichkeiten der Erfindung lassen verschiedene Änderungen und Modifikationen zu, die für einen Fachmann auf dem betreffenden Gebiet der Technik offensichtlich sind. Denkbar sind auch deren andere Modifikationen, ohne daß von der Erfindung abgewichen wird, die durch deren Patentansprüche definiert ist.

Gewerbliche Anwendbarkeit

Am wirksamsten kann die Erfindung in Rüben-, Mais- und anderen Sämaschinen bei Wirtschaftssaaten und bei Prüfungen von Einzelkornsämaschinen, für die Durchführung von Forschungsarbeiten bei der Wahl von Richtungen einer konstruktiven Verbesserung der Mechanismen von
Sämaschinen, für deren technische Diagnostik, Aufstellung auf die Bereitstellungslinie, für die Prüfung der
Funktionstüchtigkeit und die Auswahl optimaler Betriebsarten sowie für die Untersuchungen bei der Entwicklung der
Technologien der landwirtschaftlichen Produktion angewendet werden.

## PATENTANSPRÜCHE

1. System zur Kontrolle und Einschätzung einer Samenaussaat, das mindestens einen Samengeber (1), einen Weggeber (4) mit einem Impulsformer (5), eine Rechenschaltung (2), eine Anzeigeeinheit (3) enthält, dadurch g e k e n n z e i c h n e t , daß die Rechenschaltung (2) eine Schaltung (6) zur Bestimmung der Zeitpunkte von Extrema, einen ersten Zähler (8), einen Demultiplexer (7), eine Löschschaltung (9) und eine Speichereinheit (10) umfaßt, die zweite Zähler (11) nach der Zahl diskreter Meßabstände in jedem Zwischenraum zwischen den auszusäenden Samen aufweist, wobei der Samengeber (1) mit der Schaltung (6) zur Bestimmung der Zeitpunkte von Extrema verbunden ist, die an den Demultiplexer (7) angeschlossen ist, der Impulsformer (5) des Weggebers (4) an einen Eingang des ersten Zählers (8) gelegt ist, der Ausgänge aufweist, die an den Demultiplexer (7) geschaltet sind, der auch Ausgänge nach der Zahl der diskreten Meßabstände in jedem Zwischenraum zwischen den hintereinander auszusäenden Samen aufweist, die mit je einem entsprechenden Eingang der Löschschaltung (9) und einem entsprechenden zweiten Zähler (11) in der Speichereinheit (10) gekoppelt sind, der Ausgang der Löschschaltung (9) mit dem anderen Eingang des ersten Zählers (8) und die Ausgänge der zweiten Zähler (11) der Speichereinheit (10) mit der Anzeigeeinheit (3) verbunden sind.

2. System zur Kontrolle und Einschätzung einer Samenaussaat nach Anspruch 1, dadurch g e k e n n z e i c h n e t , daß die Schaltung (6) zur Bestimmung der Zeitpunkte von Extrema ein Verzögerungsglied (13), dessen Eingang als Eingang dieser Schaltung (6) dient, eine Subtraktionsschaltung (14), deren einer Eingang an den Ausgang und anderer Eingang an den Eingang des Verzögerungsgliedes (13) geschaltet ist, und ein Schwellenglied (15) enthält, dessen Eingang mit dem Ausgang der Subtraktionsschaltung (14) verbunden ist und dessen Ausgang als Ausgang der Schaltung (6) . zur Bestimmung der Zeitpunkte von Extrema dient.

3. System zur Kontrolle und Einschätzung einer Samenaussaat nach Anspruch 1, 2, dadurch g e k e n n z e i c h n e t , daß es Samengeber (1) nach der Zahl von Aussaatgeräten, eine Schaltung (16) zur Kontrolle von Ausfällen und Störungen in den Aussaatgeräten, eine Mittelungsschaltung (17) mit Eingängen nach der Zahl der Samengeber (1), ein Schwellenglied (18), eine Sperrschaltung (19) und eine Schaltung (20) zur Bestimmung einer Aussaatnorm enthält, wobei die einen Eingänge der Schaltung (16) zur Kontrolle von Ausfällen und Störungen in den Aussaatgeräten mit je einem entsprechenden Samengeber (1) und Eingang der Mittelungsschaltung (17) verbunden sind, deren Ausgang mit den anderen Eingängen der Schaltung (16) zur Kontrolle von Ausfällen und Störungen in den Aussaatgeräten und mit dem Eingang des Schwellengliedes (18) in Verbindung steht, das an einen Eingang der Sperrschaltung (19) angeschlossen ist, das zwischen dem Impulsformer (5) des Weggebers (4) und dem ersten Zähler (8) liegt, während die Eingänge der Schaltung (20) zur Bestimmung einer Aussaatnorm an die genannten Ausgänge der Samengeber (1) und des Impulsformers (5) des Weggebers (4) gekoppelt sind.

4. System zur Kontrolle und Einschätzung einer Samenaussaat nach Anspruch 3, dadurch g e k e n n z e i c h n e t , daß die Schaltung (16) zur Kontrolle von Ausfällen und Störungen in den Aussaatgeräten nach der Zahl dker Samengeber (1) integrierende Summatoren (22) deren Direkteingänge als Eingänge dieser Schaltung (16) dienen, die mit den Samengebern (1) verbunden sind, und deren Umkehreingänge als Eingänge der Schaltung (16) mit dem Ausgang der Mittelungsschaltung (17) in Verbindung stehen, und Signalisiereinrichtungen (23) enthält, die an die Ausgänge der jeweiligen integrierenden Summatoren (22) angeschlossen sind.

5. System zur Kontrolle und Einschätzung einer Samenaussaat nach einem der Ansprüche 3, 4, dadurch g e - k e n n z e i c h n e t , daß die Schaltung (20) zur Bestimmung einer Aussaatnorm eine Selektoreinrichtung (25), deren Eingänge als Eingänge dieser Schaltung (20) dienen, die mit den Samengebern (1) verbunden sind, eine Schaltung (6) zur Bestimmung der Zeitpunkte von Extrema, deren Eingang an den Ausgang der Selektoreinrichtung (25) gelegt ist; einen Wegzähler (26), dessen einer Eingang als Eingang dieser Schaltung (20) auftritt, der mit dem Impulsformer (5) des Weggebers (4) verbunden ist; eine Löschschaltung (28), deren Eingang mit dem Ausgang des Wegzählers (26) und deren einer der Ausgänge mit dem anderen Eingang des Wegzählers (26) verbunden ist; einen Samenzähler (27), an dessen einen der Eingänge der Ausgang der Schaltung (24) zur Bestimmung der Zeitpunkte von Extrema und an dessen anderen Eingang der genannte Ausgang der Löschschaltung (28) geführt ist; eine Anzeigeeinheit (29), an die der Ausgang des Samenzählers (27) und der andere Ausgang der Löschschaltung (28) gelegt sind, aufweist.

6. System zur Kontrolle und Einschätzung einer Samenaussaat nach Anspruch 5, dadurch g e k e n n z e i c h n - n e t , daß die Schaltung (24) zur Bestimmung der Zeitpunkte von Extrema ein Verzögerungsglied (13), dessen Eingang als Eingang dieser Schaltung (24) dient, eine Subtraktionsschaltung (14), deren einer Eingang an den Ausgang und deren anderer Eingang an den Eingang des Verzögerungsgliedes (13) geschaltet ist, und ein Schwellenglied (15) aufweist, dessen Eingang mit dem Ausgang der Subtraktionsschaltung (14) verbunden ist und dessen Ausgang als Ausgang der Schaltung (24) zur Bestimmung der Zeitpunkte von Extrema dient.

7. System zur Kontrolle und Einschätzung einer Samenaussaat nach einem der Ansprüche 5, 6, dadurch g e k e n n z e i c h n e t , daß die Anzeige-einheit (29) eine Reihenschaltung aus einem Register ( 30), an welches die Ausgänge des Samenzählers (27) und der Löschschaltung (28) angeschlossen sind, einem Dechiffrator (31) und einem Digitalanzeiger (32) ent-hält.

FIG. 2

FIG. 1

FIG. 3

FIG. 5

FIG. 4

# INTERNATIONAL SEARCH REPORT

## I. CLASSIFICATION OF SUBJECT MATTER (if several classification symbols apply, indicate all) *

According to International Patent Classification (IPC) or to both National Classification and IPC

IPC$^4$: G 07 C 5/10, G 06 M 11/04

## II. FIELDS SEARCHED

| Minimum Documentation Searched 7 | |
| --- | --- |
| Classification System ı | Classification Symbols |
| IPC$^4$: | G 07 C 5/08, 5/10, G 06 M 11/00÷11/04, A 01 C 7/00÷7/04 |

Documentation Searched other than Minimum Documentation
to the Extent that such Documents are Included in the Fields Searched *

## III. DOCUMENTS CONSIDERED TO BE RELEVANT *

| Category * ı | Citation of Document, 11 with indication, where appropriate, of the relevant passages 12 | Relevant to Claim No. 13 |
| --- | --- | --- |
| A | DE, C3, 2105786, (DICKEY-JOHN CORP.), 21 January 1982, see the claims, figure 1 | 1 |
| A | US, A, 3537091, (CASE COMPANY), 27 October 1970, see figure 7 | 1 |
| A | GB, B, 1597358, (ROBYDOME LIMITED OF SPOONS HALL, PEBMARSH, HALLSTEAD, ESSEX, A BRITISH COMPANY), 9 September 1981, see the claims, the drawing | 1 |
| A | SU, A1, 1105141, (Voronezhsky lesotekhnichesky institut) 30 July 1984, see the claims, the drawing | 1 |
| A | US, A, 3783247 (COULTER ELECTRONICS, INC.) 1 January 1974, see figures 1,2 | 1 |
| A | SU, A1, 1361597 (Moskovsky institut inzhenerov selskokhozyaistvennogo proizvodstva), 23 December 1987, see the claims, figure 2 | 1 |
| A | SU, A1, 1264217 (V.V. Trotsenko et al.), 15 October 1986, see the claims, figures 1,2 | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
| --- | --- |
| 17 April 1989 (17.04.89) | 5 May 1989 (05.05.89) |

| International Searching Authority | Signature of Authorized Officer |
| --- | --- |
| ISA/SU | |

Form PCT/ISA/210 (second sheet) (January 1985)

FORTSETZUNG DER ANGABEN VOM ZWEITEN BLATT

| | | |
|---|---|---|
| A | US, A, 3783247 (COULTER ELECTRONICS, INC.) I. Januar 1974 (01.01.74), s.Fig.I,2 | I |
| A | SU, AI, 1361597 (Moskovsky institut selskokhozyastvennogo proizvodstva), 23.Dezember 1987 (23.12.87), s. Patentanspruch., Fig.2 | I |
| A | SU, AI, 1264217 (V.V.Trotsenko u.a.), 15. Oktober 1986 (15.10.86), s.Patentanspruch., Fig.1,2 | I |

V. ☐ BEMERKUNGEN ZU DEN ANSPRÜCHEN, DIE SICH ALS NICHT RECHERCHIERBAR ERWIESEN HABEN [10]

Dieser internationale Recherchenbericht geht gemäß Artikel 17 Absatz 2 Buchstabe a aus folgenden Gründen auf einige Ansprüche nicht ein:

1. ☐ Ansprüche Nr. ............ , weil sie sich auf Gebiete beziehen, in bezug auf die diese Behörde nicht zur Durchführung einer Recherche verpflichtet ist, nämlich

2. ☐ Ansprüche Nr. ............ , weil sie sich auf Teile der internationalen Anmeldung beziehen, die den vorgeschriebenen Anforderungen so wenig entsprechen, daß eine sinnvolle Recherche nicht durchgeführt werden kann [13], insbesondere

VI. ☐ BEMERKUNGEN BEI MANGELNDER EINHEITLICHKEIT DER ERFINDUNG [11]

Die Internationale Recherchenbehörde hat festgestellt, daß diese internationale Anmeldung mehrere Erfindungen enthält:

1. ☐ Da der Anmelder alle erforderlichen zusätzlichen Recherchengebühren rechtzeitig entrichtet hat, erstreckt sich dieser internationale Recherchenbericht auf alle recherchierbaren Ansprüche der internationalen Anmeldung.

2. ☐ Da der Anmelder nur einige der erforderlichen zusätzlichen Recherchengebühren rechtzeitig entrichtet hat, erstreckt sich dieser internationale Recherchenbericht nur auf die Ansprüche der internationalen Anmeldung, für die Gebühren gezahlt worden sind, also auf die folgenden Ansprüche:

3. ☐ Der Anmelder hat die erforderlichen zusätzlichen Recherchengebühren nicht rechtzeitig entrichtet. Dieser internationale Recherchenbericht beschränkt sich daher auf die zuerst in den Ansprüchen erwähnte Erfindung; sie ist in folgenden Ansprüchen erfaßt:

Bemerkung hinsichtlich eines Widerspruchs

☐ Die zusätzlichen Gebühren wurden vom Anmelder unter Widerspruch gezahlt.

☐ Die Zahlung zusätzlicher Gebühren erfolgte ohne Widerspruch.

Formblatt PCT/ISA/210    (Ergänzungsbogen 2)    (Oktober 1977)    Siehe Anmerkungen auf beiliegendem Blatt.